# EUROPEAN PATENT APPLICATION

(11) **EP 4 757 396 A1**
(43) Date of publication of application: **10.06.2026**
(21) Application number: 23948358.9
(22) Date of filing: 04.08.2023
(51) Int. Cl.: H04W 24/10

(54) **TERMINAL, WIRELESS COMMUNICATION METHOD, AND BASE STATION**

(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); YOSHIOKA, Shohei, Tokyo 100-6150 (JP); HARADA, Hiroki, Tokyo 100-6150 (JP)
(74) Representative: Hoffmann Eitle
(86) International application number: PCT/JP2023/028576
(87) International publication number: WO 2025/032637

(57) **Abstract**

A terminal according to an aspect of the present disclosure includes a receiving section that receives information related to a priority of cell selection for a non-terrestrial network (NTN) or a terrestrial network (TN), and a control section that determines a cell being a target of reporting a measurement result of received power, based on the priority. According to an aspect of the present disclosure, it is possible to appropriately perform cell switch in a cellular system in which a TN and an NTN coexist.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, 6G), a new system in which terrestrial networks (TNs) and non-terrestrial networks (NTNs) are integrated is under study.

However, in a cellular system in which TN and NTN coexist, a common mobility system has not been sufficiently studied yet. If these are not clear, communication throughput in movement between cells may be reduced.

In view of this, an object of the present disclosure is to provide a terminal, a radio communication method, and a base station that enable cell switch to be appropriately performed. Solution to Problem

A terminal according to an aspect of the present disclosure includes a receiving section that receives information related to a priority of cell selection for a non-terrestrial network (NTN) or a terrestrial network (TN), and a control section that determines a cell being a target of reporting a measurement result of received power, based on the priority.

### Advantageous Effects of Invention

According to an aspect of the present disclosure, it is possible to appropriately perform cell switch in a cellular system in which a TN and an NTN coexist.

### Brief Description of Drawings

[FIG. 1] FIG. 1 is a diagram to show an example of LTM under study for Rel. 18.
[FIG. 2] FIG. 2A is a diagram to show an example of UE movement in an urban area. FIG. 2B is a diagram to show changes in L1-RSRP for PCI #1 and PCI #3, corresponding to FIG. 2A.
[FIG. 3] FIG. 3A is a diagram to show an example of a case where a UE goes through a tunnel. FIG. 3B is a diagram to show changes in L1-RSRP for PCI #1 and PCI #3, corresponding to FIG. 3A.
[FIG. 4] FIG. 4A is a diagram to show an example of a case where a UE moves between cells of low earth orbit (LEO). FIG. 4B is a diagram to show changes in L1-RSRP for PCI #1 and PCI #3, corresponding to FIG. 4A.
[FIG. 5] FIG. 5 is a diagram to show characteristics of each type of handover (HO).
[FIG. 6] FIG. 6 is a conceptual diagram to show an example in which a UE is simultaneously connected to TN and NTN cells.
[FIG. 7] FIG. 7 is a conceptual diagram to show an example in which the UE is simultaneously connected to a plurality of NTN cells.
[FIG. 8] FIG. 8 is a diagram to show an example of priorities of the TN and NTN cells according to a first embodiment.
[FIG. 9] FIG. 9 is a diagram to show an example of priorities of the TN and NTN cells according to the first embodiment.
[FIG. 10] FIG. 10 is a diagram to show an example of priorities of the TN and NTN cells according to the first embodiment.
[FIG. 11] FIG. 11 is a diagram to show an example of priorities of the TN and NTN cells according to the first embodiment.
[FIG. 12] FIG. 12 is a diagram to show an example of priorities of the TN and NTN cells according to the first embodiment.
[FIG. 13] FIG. 13 is a diagram to show an example of a quality offset according to a fourth embodiment.
[FIG. 14] FIG. 14 is a diagram to show an example of a schematic structure of a radio communication system according to one embodiment.
[FIG. 15] FIG. 15 is a diagram to show an example of a structure of a base station according to one embodiment.
[FIG. 16] FIG. 16 is a diagram to show an example of a structure of a user terminal according to one embodiment.
[FIG. 17] FIG. 17 is a diagram to show an example of a hardware structure of the base station and the user terminal according to one embodiment.
[FIG. 18] FIG. 18 is a diagram to show an example of a vehicle according to one embodiment.

### Description of Embodiments

### (L1L2-triggered Mobility (LTM) in Rel. 18)

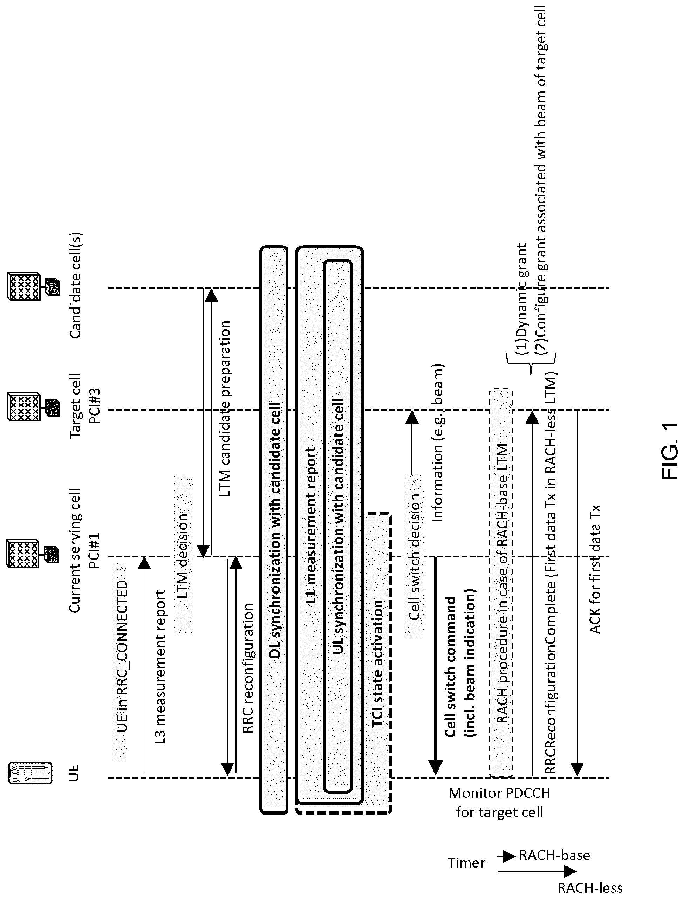

FIG. 1 is a diagram to show an example of LTM under study for Rel. 18. A UE performs RRC connection with respect to a current serving cell (PCI #1) and transmits an L3 measurement report. Based on the L3 measurement report, the serving cell (base station) decides to perform LTM and performs preparation for the LTM with candidate cell(s). The UE and the serving cell perform RRC reconfiguration. Note that the candidate cell(s) may include a target cell (PCI #3).

The UE, serving cell, target cell, and candidate cell(s) perform DL synchronization. The UE performs L1 (for example, L1-RSRP/SINR) measurement of the serving cell / candidate cell(s) / target cell for reporting. The UE, serving cell, target cell, and candidate cell(s) perform UL synchronization.

Based on the L1 measurement report, the serving cell decides to perform serving cell switch to the target cell (PCI #3) and transmits a cell switch command to the UE. After reception of the cell switch command, the UE initiates PDCCH monitoring for the target cell.

In a case of RACH-base LTM, the UE performs an RACH procedure for the target cell. In a case of RACH-less LTM, the UE transmits an RRC reconfiguration completion message and transmits first data to the target cell. The transmission of the first data is performed based on a dynamic grant or on a configured grant associated with a beam of the target cell. The target cell transmits, to the UE, ACK for the transmission.

### (Mobility Scenarios)

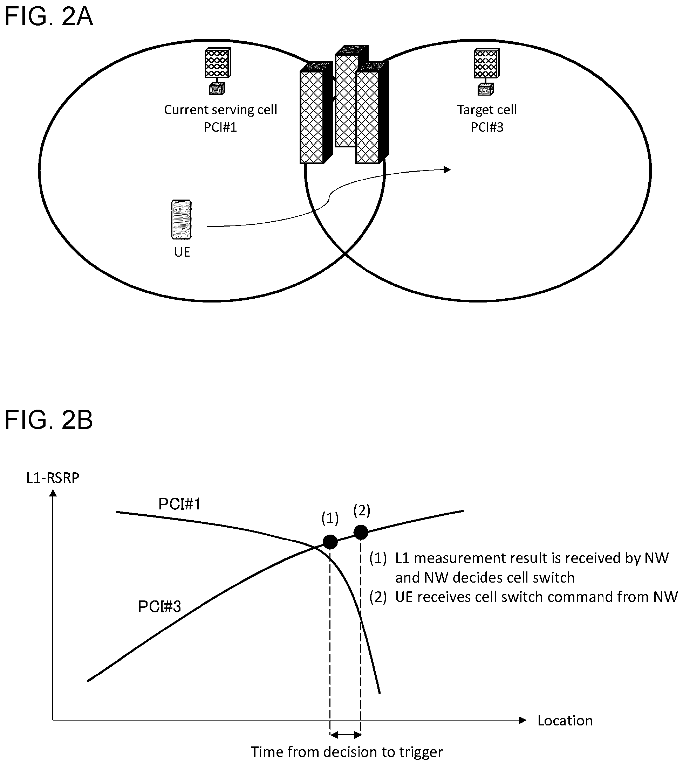

Hereinafter, application scenarios (scenarios 1 to 3) of mobility will be illustrated with reference to FIG. 2 to FIG. 4.

### <Scenario 1>

FIG. 2A is a diagram to show an example of UE movement in urban areas. FIG. 2B is a diagram to show changes in L1-RSRP for PCI #1 and PCI #3, corresponding to FIG. 2A. In a case of FR2, there are frequent dynamic channel changes, and thus L1-RSRP may suddenly fall due to the influence of buildings and the like, especially in urban areas. Thus, Non-Line Of Site (NLOS) and the like occur frequently.

In the example of FIG. 2A, a UE moves from a cell of PCI #1 (current serving cell) to a cell of PCI #3 (target cell). In this case, for example, in a case where an NW receives an L1 measurement result at (1) of FIG. 2B and detects a fall in L1-RSRP, the NW decides cell switch. Then, at (2), the NW transmits a cell switch command to the UE. However, at (2), L1-RSRP of PCI #1 is low, and thus the UE may not be able to normally receive the cell switch command.

### <Scenario 2>

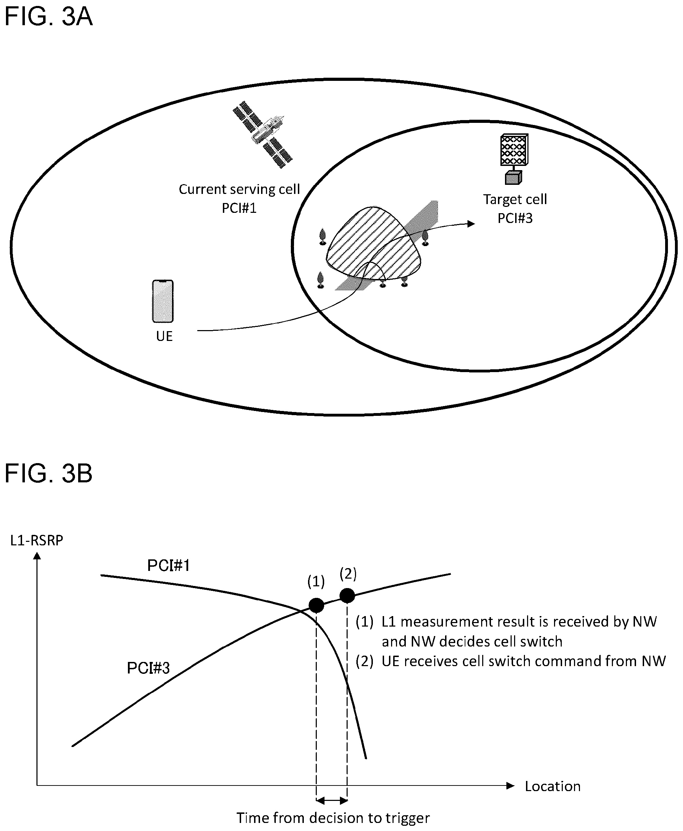

FIG. 3A is a diagram to show an example of a case where a UE goes through a tunnel. FIG. 3B is a diagram to show changes in L1-RSRP for PCI #1 and PCI #3, corresponding to FIG. 3A. When the UE goes through a tunnel or enters a room, L1-RSRP may suddenly fall, causing Non-Line Of Site (NLOS) and the like. In this case, similarly to Scenario 1, L1-RSRP of PCI #1 suddenly falls, and thus the UE may not be able to normally receive the cell switch command.

### <Scenario 3>

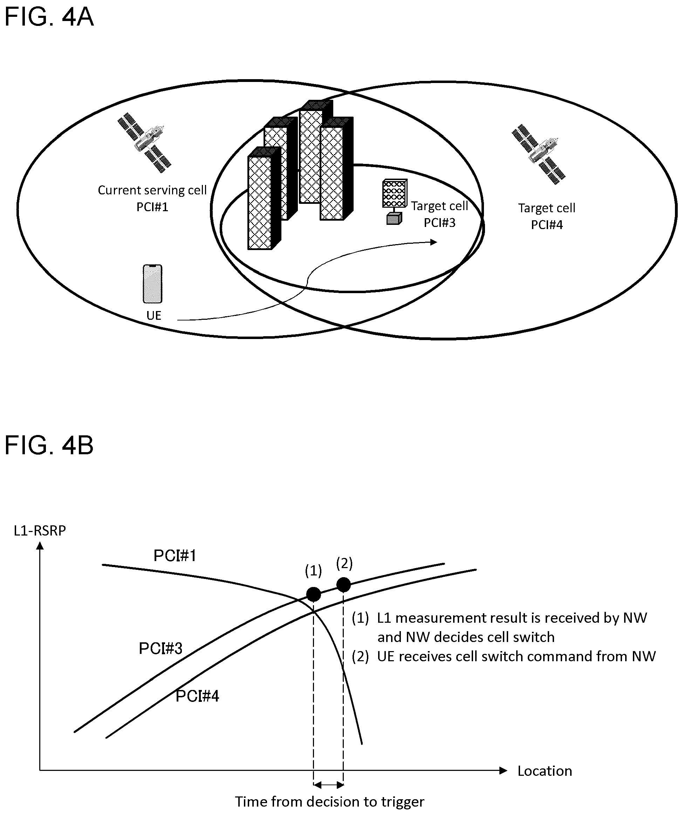

FIG. 4A is a diagram to show an example of a case where a UE moves between cells of low earth orbit (LEO). FIG. 4B is a diagram to show changes in L1-RSRP for PCI #1 and PCI #3, corresponding to FIG. 4A. For LEO, the angle of elevation is low, and thus NLOS and the like may be caused due to the influence of buildings and the like. The example of FIG. 4A assumes a case that both non-terrestrial networks (NTNs) such as LEO and terrestrial networks (TNs) such as PCI #3 exist. In this case also, similarly to Scenario 1, L1-RSRP of PCI #1 suddenly falls, and thus the UE may not be able to normally receive the cell switch command. This similarly applies to a case of both TN-NTN (PCI #1 - PCI #3) mobility and NTN-NTN (PCI #1 - PCI #4) mobility.

### (Handover (HO))

In existing LTE (Rel. 14 or earlier versions)/NR (Rel. 18 or earlier versions) systems, various mobility-related frameworks below have been introduced:
- Beam management.
- Beam failure recovery.
- Handover (HO).

The HO includes, for example, inter-gNB-CU (Central Unit) HO, intra-gNB-CU HO, and intra-gNB-DU (Distributed Unit) HO.

The HO includes, for example, Conditional HO (CHO). The CHO means HO to be performed when a plurality of candidates for a base station (BS)/cell as an HO target (candidate BSs/cells) are configured, and a specific condition is satisfied.

Here, conditional handover (CHO) of Rel. 16 and later versions will be described. CHO is applied to non-terrestrial networks (NTNs), for example. For NTNs, in order for a UE to perform CHO to a candidate cell, the following additional trigger conditions are supported.
- radio resource management (RRM) measurement-based event A4 (as described below).
- time-based trigger condition.
- location-based trigger condition.

The time-based or location-based trigger condition is configured together with any one of measurement-based trigger conditions (CHO events A3/A4/A5 to be described later below) all the time. How a UE evaluates the time-based or location-based trigger condition together with the RRM measurement-based event depends on the UE implementation.

As described above, for example, in CHO in non-terrestrial networks (NTNs), CHO may be performed when quality of a neighbor cell falls below a threshold (event A4 occurs) irrespective of quality of a present cell.

For CHO in the NTN, time point-triggered CHO (time-based trigger condition described above) may be defined. In the time point-triggered CHO, CHO is performed when the present time has passed a service delivery time for an NTN cell.

For example, as a use case, it is assumed that the UE communicates with a low earth orbit (LEO) which is an NTN cell. In this case, the LEO does not stay in a certain position, and thus a service for the point is stopped when the present time has passed a certain time/time point. Thus, the UE needs to perform the time point-triggered CHO based on the certain time/time point.

For CHO in the NTN, location-triggered CHO (location-based trigger condition described above) may be defined. In the location-triggered CHO, CHO is performed when a distance between a location of the UE and a reference location of the cell is a certain value or more (exceeds a specific threshold).

For example, as another use case, it is assumed that a cell range formed by LEO moves on the ground. For such a service link with a cell/cell range moving on the ground, a reference location of the cell (for example, the center position of the cell) changes with respect to a location of the UE. Thus, the UE needs to perform the location-triggered CHO based on the location of the UE and the reference location of the cell.

The HO may include Dual active protocol stack based handover (DAPS HO) for simultaneous connection with a BS/cell before the HO and a BS/cell after the HO.

The HO may include L1/L2 signal-based HO (L1L2-triggered mobility (LTM)).

In the present disclosure, the HO may mean operation for switching of a connection target (BS/cell).

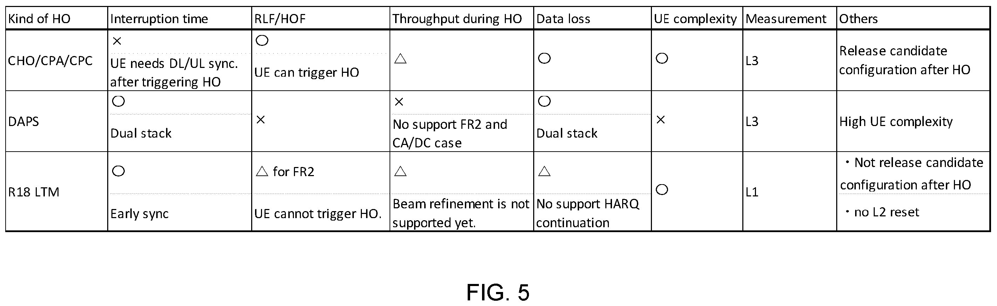

FIG. 5 is a diagram to show characteristics of each type of handover (HO). As shown in FIG. 5, for example, Rel-18 LTM has a feature that the interruption time is short as compared with CHO/Conditional PSCell Addition (CPA)/Conditional PSCell Change (CPC) and Dual active protocol stack based handover (DAPS). Meanwhile, for Rel-18 LTM, radio link failure (RLF) and hand over failure (HOF) may be difficult, especially in FR2, in some cases.

As described above, there are advantages/problems for each type of HO, and it is assumed that problems to be considered are different depending on application scenarios.

### (Use of Mobility as a Service (MaaS))

For future radio communication (cellular) systems (for example, 6G), it is studied to use a frequency (for example, FR3/sub-THz or the like) much higher than an existing used frequency. There is also a need to further efficiently use an existing high frequency (for example, FR2).

Realizing this requires that seamless communication is continued for movement of the UE.

For movement of people (UEs/terminals), studies have advanced a service related to a combination of a plurality of transportation means (for example, Mobility as a Service (MaaS)), as a framework for determining an optimum transportation mean in consideration of various transportation means (for example, railways/vehicles (for example, bus/taxi/car sharing/bike sharing)/aircrafts/ships and the like).

It is considered that future radio communication systems (for example, 6G) can implement seamless UE communication by performing communication using this service (for example, MaaS).

### (Reporting Configuration for Mobility (ReportConfigNR))

In ReportConfigNR being an RRC information element, criteria for triggering of an NR measurement reporting event, CHO, conditional PSCell addition (CPA), a conditional PSCell change (CPC) event, or a Layer 2 UE-to-Network (L2U2N) relay measurement reporting event are defined. For an event labelled AN (N is 1, 2) as below, a measurement reporting event, CHO, CPA, and a CPC event are based on cell measurement results derived based on an SS/PBCH block or CSI-RS. Note that "serving," "neighbour," and "PCell/PSCell" may be interpreted as measurement results (such as L1-RSRP/L1-SINR) of a serving cell, a neighbouring cell, and a PCell/PSCell, respectively.

Event A1: Serving becomes better than an absolute threshold.
Event A2: Serving becomes worse than the absolute threshold.
Event A3: Neighbour becomes amount of offset better than PCell/PSCell.
Event A4: Neighbour becomes better than the absolute threshold.
Event A5: PCell/PSCell becomes worse than an absolute threshold 1 and neighbour/SCell becomes better than another absolute threshold 2.
Event A6: A neighbouring cell becomes with amount of offset larger than that of an SCell.
Event D1: A distance between a UE and a reference location (referenceLocation1) becomes longer than a configured threshold (distanceThreshFromReference1) and a distance between the UE and a reference location (referenceLocation2) becomes shorter than a configured threshold (distanceThreshFromReference2).
Conditional Event A3: Conditional reconfiguration candidate becomes amount of offset better than PCell/PSCell.
Conditional Phenomenon A4: Conditional reconfiguration candidate becomes better than the absolute threshold.
Conditional Phenomenon A5: PCell/PSCell becomes worse than the absolute threshold 1 and conditional reconfiguration candidate becomes better than the other absolute threshold 2.
Condition Event D1: A distance between a UE and the reference location (referenceLocation1) becomes longer than the configured threshold (distanceThreshFromReference1) and a distance between the UE and the reference location (referenceLocation2) of conditional reconfiguration candidate becomes shorter than the configured threshold (distanceThreshFromReference2).
Condition Event T1: A time measured by a UE exceeds a configured threshold t1-Threshold and is shorter than t1-Threshold+duration.
Event X1: A UE of a serving L2U2N relay becomes worse than the absolute threshold 1 and an NR cell becomes better than the other absolute threshold 2.
Event X2: A UE of a serving L2U2N relay becomes worse than the absolute threshold.
   For event I1, a measurement reporting event is based on a cross link interference (CLI) measurement result, which is derived based on SRS-RSRP or CLI-RSSI.
Event I1: Interference becomes higher than the absolute threshold.

### (Mobility for 6G)

In consideration of the above-described various mobility use cases (scenarios), a new system in which terrestrial networks (TN) and non-terrestrial networks (NTN) are integrated is under study as a future cellular system (for example, for 6G). This is expected to provide powerful and sustainable networks, improved coverage, new services, improved performance, and the like. In particular, in such a system, functions of a core network (CN) can be installed in satellites.

On the other hand, in such an integrated system, it is assumed that a connection destination of the UE is switched between the TN and the NTN according to the service/communication quality/location/time. Furthermore, it is also assumed that the TN and the NTN are used simultaneously.

In other words, for the new system in which the TN and the NTN are combined, it is necessary to study a common mobility system (framework).

As described above, according to FIG. 5, a plurality of HOs are supported. In this case, CHO/LTM is superior compared to DAPS in overall view. In particular, CHO has high robustness, and LTM has a short interruption time.

Furthermore, in future cellular systems, the use of higher frequency bands is considered, and it is assumed that more beam-centric systems (for example, from high frequency to high frequency, or from low frequency to high frequency) are employed.

In view of such circumstances, it is considered that mobility using L1 measurement report (LTM) is preferable regardless of the system operation to be studied.

### (Cellular System Integrating TN and NTN)

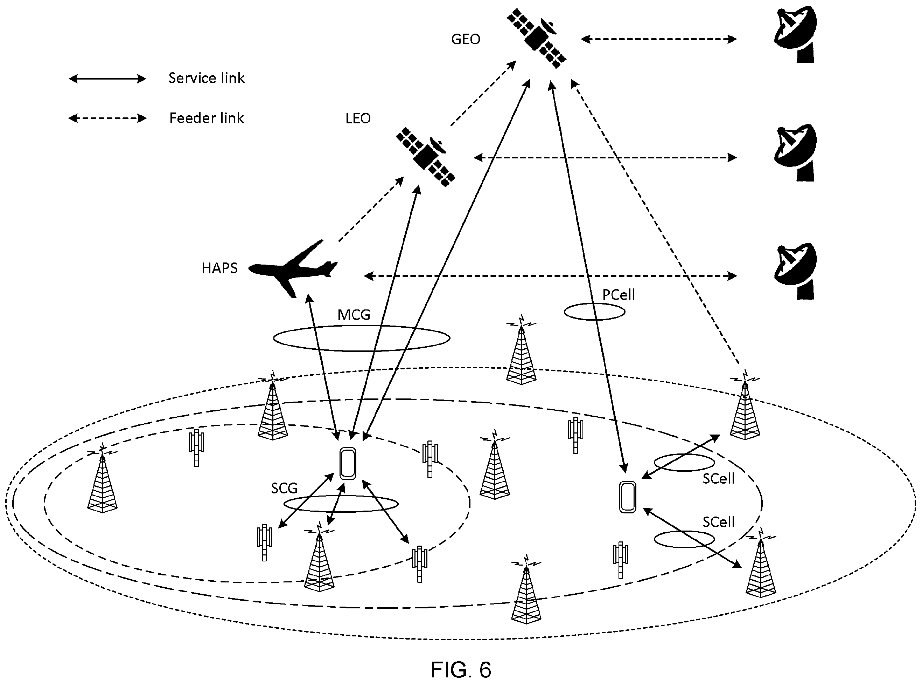

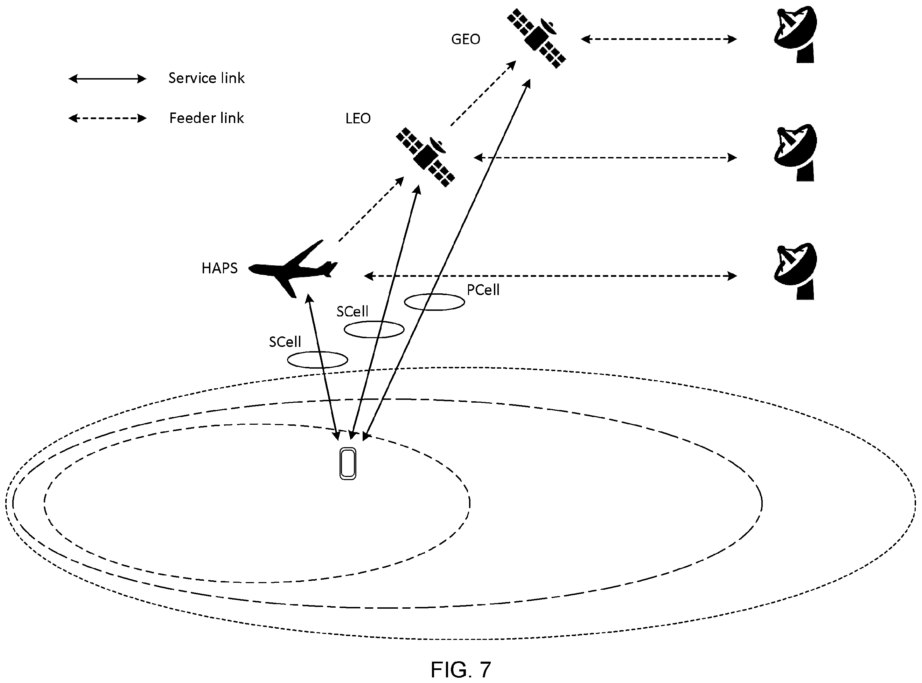

An example of the cellular system including the TN/NTN will be described with reference to FIGS. 6 and 7. FIG. 6 is a conceptual diagram to show an example in which the UE is simultaneously connected to TN and NTN cells. FIG. 7 is a conceptual diagram to show an example in which a UE simultaneously connects to a plurality of NTN cells.

In FIGS. 6 and 7, communications with UEs (communication via the UEs) among communications between entities are indicated by service links of solid lines. On the other hand, among the communications between the entities, communications via no UE are indicated by feeder links of broken lines. The feeder links may represent radio links that provide radio communication between a ground station (earth station) and a space station.

Among the entities shown in FIGS. 6 and 7, GEO may mean a geosynchronous earth orbit, LEO may mean a low earth orbit, and HAPS may mean a high altitude platform station (HAPS)/high altitude pseudo satellite. The HAPS may include an unmanned flying object capable of flying in a stratosphere at a certain altitude from the ground for a long period of time without landing, for example.

In the present disclosure, a GEO, an LEO, HAPS, a satellite, a communication satellite, and a space station may be interchangeably interpreted. Communications via these entities (i.e., space stations) may be referred to as an NTN. On the other hand, communications without these entities may be referred to as a TN.

For example, the GEO/LEO/HAPS may communicate with the ground station/base station via feeder links. The GEO/LEO/HAPS may each communicate with the UE via a service link.

The HAPS may also communicate with the LEO over a feeder link. The LEO may communicate with the GEO via a feeder link. As shown in FIGS. 6 and 7, the GEO/LEO/HAPS may have a positional relationship in which the HAPS, the LEO, and the GEO are located farther from the ground in this order.

### <Range (Coverage) Covered by TN and NTN>

As illustrated in FIG. 6, it is assumed that the UE is simultaneously connected to a cell of the TN and a cell of the NTN. For example, in a case of dual connectivity (DC), the GEO/LEO/HAPS may form a master cell group (MCG). Base stations (BSs/gNBs) around the UE may form a secondary cell group (SCG). Note that the MCG may mean a cell group including a primary cell (PCell), and the SCG may mean a cell group other than the MCG.

In this case, the MCG includes cells (group) designed by the NTN and may be included in the concept of the NTN. On the other hand, the SCG includes cells (group) designed by the TN, and may be included in the concept of the TN.

Note that the configuration is not limited to the example of FIG. 6, and the base stations around the UE may form the MCG, and the GEO/LEO/HAPS may form the SCG. In this case, the MCG includes cells (group) designed by the TN and may be included in the concept of the TN. On the other hand, the SCG includes cells (group) designed by the NTN, and may be included in the concept of the NTN.

In the example of FIG. 6, in a case of carrier aggregation (CA), the GEO/LEO/HAPS (GEO in FIG. 6) may form a primary cell (PCell). The base stations (BSs/gNBs) around the UE may form a secondary cell SCell.

In this case, the PCell is a cell designed by the NTN and may be included in the concept of the NTN. On the other hand, the SCell is a cell designed by the TN and may be included in the concept of the TN.

In this case, the UE may be connected to the cell of the same NTN for a long time. This reduces handover.

Alternatively, the configuration is not limited to the example of FIG. 6, and the base stations around the UE may form the PCell, and the GEO/LEO/HAPS may form the SCell. In this case, the PCell is a cell designed by the TN and may be included in the concept of the TN. On the other hand, the SCell is a cell designed by the NTN and may be included in the concept of the NTN.

In this case, NLOS may occur due to the TN cell. Therefore, it is assumed that NLOS needs to be corrected in the NTN cell.

### <Range (Coverage) Covered by NTN>

As shown in FIG. 7, it is assumed that the UE is simultaneously connected to a plurality of NTN (GEO/LEO/HAPS) cells. For example, in the case of dual connectivity (DC), the GEO/LEO/HAPS may form the MCG and the SCG.

In this case, the MCG and the SCG include cells (group) designed by the NTN, and may be included in the concept of the NTN.

In the example of FIG. 7, in the case of carrier aggregation (CA), the GEO/LEO/HAPS may form a PCell/SCell. More specifically, the GEO may form the PCell, and the LEO/HAPS may form the SCell. Note that which of the GEO/LEO/HAPS forms the PCell/SCell is not limited to this, and can be changed as appropriate.

In the example of FIG. 7, the PCell and the SCell are cells designed by the NTN and may be included in the concept of the NTN.

For example, when a non-LEO satellite (GEO/HAPS) forms the PCell, throughput may be improved and handover may be reduced.

### (Analysis)

As described above, in the cellular system in which the TN and the NTN coexist, a common mobility system has not been sufficiently studied yet.

For example, it is conceivable to use mobility using L1 measurement report (LTM). However, it is assumed that a bias (deviation) occurs in cell selection/beam selection of a handover destination.

To be more specific, an L1 RSRP/SINR of the TN may be detected (measured) to be larger than an L1 RSRP/SINR of the NTN. This is because the NTN (non-terrestrial system) is farther from the UE than the TN (terrestrial system), and thus received power of these may differ.

Therefore, when the L1 measurement report is used in the mobility between the TN and the NTN and the UE performs the existing cell selection (cell selection based on magnitude of received power (measured result)), a cell of the TN having a relatively high received power is always selected. In other words, a situation may occur in which a cell of the NTN having relatively low received power, is not selected at all.

In this way, even when LTM of Rel. 18 is applied, cell switch suitable for the TN/NTN may not normally performed. Therefore, communication throughput at the time of movement between cells may decrease.

Thus, the inventors of the present invention came up with the idea of a method that enables appropriate cell switch in a cellular system in which a TN and an NTN coexist.

### (Various Interpretations, etc.)

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a base station, a BS, a gNB, and a network (NW) may be interchangeably interpreted.

In the present disclosure, a cell group, a serving cell group, a master cell group (MCG), and a secondary cell group (SCG) may be interchangeably interpreted. L1/L2, L1/L2 signaling, and DCI/MAC CE may be interchangeably interpreted. A serving cell may be replaced with a cell where a PDSCH is transmitted. A candidate cell may mean a cell of candidate to be a serving cell by L1/L2 inter-cell mobility. L1L2-triggered mobility (LTM) and L1/L2 inter-cell mobility may be interchangeably interpreted.

In the present disclosure, a cell, a PCI, a serving cell, a source serving cell, a source cell, a CC, a BWP, a BWP in a CC, and a band may be interchangeably interpreted. In the present disclosure, a cell, a PCI, a cell of additional PCI, an additional cell, another cell, a non-serving cell, a cell with a different PCI, a candidate cell, a candidate serving cell, a cell with a PCI different from a PCI of a current serving cell, a different serving cell, and a target cell may be interchangeably interpreted. A target cell may be a cell selected from among a plurality of candidate cells. In the present disclosure, switch, change, and update may be interchangeably interpreted. A serving cell may be interpreted as a serving cell before switch or a serving cell after switch.

In the present disclosure, a priority order, a priority, measurement quality, quality, a measurement value, a measurement result, received power, received quality, an absolute value, and a difference value may be interchangeably interpreted.

In the present disclosure, RSRP may be interchangeably interpreted as any parameter (for example, RSRQ, SINR, CSI) related to received power/received quality, or the like.

In the present disclosure, a candidate cell, a cell, and a reporting target cell may be interchangeably interpreted.

In the present disclosure, a report (reporting) may mean a report (reporting, transmission) of quality/measurement value/received power.

In the present disclosure, a GEO, an LEO, HAPS, a satellite, a communication satellite, and a space station may be interchangeably interpreted. Communications via these entities (i.e., space stations) may be referred to as an NTN. On the other hand, communications without these entities may be referred to as a TN.

In the present disclosure, a cell, an MCG, an SCG, a PCell, and an SCell may be interchangeably interpreted.

### (Radio Communication Method)

Embodiments of the present disclosure can be broadly classified as follows.
- First embodiment: priority of cell selection.
- Second embodiment: the number of cells to be reported.
- Third embodiment: events/thresholds independent per cell.
- Fourth embodiment: Quality offset between TN and NTN.

Hereinafter, each embodiment will be described based on these. Each of these embodiments/options may be applied alone, or a plurality of them may be applied in combination as appropriate.

Note that in the present disclosure, the TN and the NTN are illustrated as examples for application scenarios of cell switch (mobility), but the application scenarios are not limited thereto. Embodiments of the present disclosure are also applicable to other scenarios (any scenario other than the TN and the NTN).

Although L1 measurement report is illustrated as an example in the present disclosure, the present disclosure is not limited thereto. Embodiments of the present disclosure are applicable to any measurement report.

### <First Embodiment>

The first embodiment relates to priority of cell selection.

For the cell selection of TN/NTN, a parameter related to priority may be defined. The priority may be a parameter indicating which cell of the TN and the NTN is preferentially selected, or a parameter (specific bit information) indicating a priority order of cell selection based on degree of L1 measurement result.

Note that the priority (order) in the present disclosure represents an order of selection, not a temporal order. In other words, the priority in the present disclosure does not represent a temporal concept (time series), but simply represents a priority order of selection.

### [Signaling of NW]

The priority (value indicating priority) related to cell selection may be configured/indicated by higher layer signaling/physical layer signaling, or may be determined based on a rule/UE capability report predefined by a specification.

The priority for cell selection may be exemplified by the following options.

### <Option 1>

A case where NTN candidate cells are prioritized among configured candidate cells.
- A candidate cell with the same frequency as a serving cell is prioritized (option 1-1).
- A candidate cell with a different frequency from the serving cell is prioritized (option 1-2).

The above priority may be applied to a single reporting instance. Alternatively, the priority may be applied only to at least one or more cells in the reporting instance that is reported under a certain condition.

Here, a cell that can be selected under a certain condition may be a cell of which quality is reported by an absolute value/difference value of a measurement result indicating a value of priority, for example.

When priority is applied in the single reporting instance, candidate cells of the TN may be included if there are extra resources available for reporting.

The serving cell may be a TN/NTN cell.

### <Option 2>

A case where TN candidate cells are prioritized among configured candidate cells.
- A candidate cell with the same frequency as a serving cell is prioritized (option 1-1).
- A candidate cell with a different frequency from the serving cell is prioritized (option 1-2).

The above priority may be applied to a single reporting instance. Alternatively, the priority may be applied only to at least one or more cells in the reporting instance that is reported under a certain condition.

Here, a cell that can be selected under a certain condition may be a cell of which quality is reported by an absolute value/difference value, for example.

When priority is applied in the single reporting instance, candidate cells of the NTN may be included if there are extra resources available for reporting.

The serving cell may be a TN/NTN cell.

In the above-described option 1/2, the TN/NTN candidate cells may be reported in different reporting instances.

### [Signaling Timing]

### <Option 1>

The priority may be semi-statically configured by higher layer signaling (for example, RRC)/rule predefined by specification/UE capability reporting.

### <Option 2>

The priority may be dynamically indicated by higher layer signaling (for example, MAC CE)/physical layer signaling (for example, DCI)/rule predefined by specification/UE capability reporting.

### [UE Behavior]

The UE may report quality of a scheduled PUCCH/PUSCH to the NW by using the UCI/MAC CE according to the configured/indicated priority. The cell being a target of reporting may be determined based on at least one of the following options.

### <Option 1>

The UE may determine which cell to report among the candidate cells prioritized by the absolute/difference value indicating the value of priority. In other words, the UE may determine the cell being a target of reporting, based on the absolute value/difference value (measurement value) indicating the value of priority. For example, the UE may determine a cell with a high priority (value) as the cell being a target of reporting. In other words, the priority (priority order) may be in descending order of the measurement value.

### <Option 2>

The UE may determine the cell being a target of reporting, based on the absolute value/difference value indicating the value of priority, regardless of the priority order of the candidate cells (regardless of which candidate cell is prioritized). In other words, the UE may determine the cell being a target of reporting, based on the absolute value/difference value (measurement value) indicating the value of priority. Option 2 can be further classified into options 2-1 to 2-4.

### <Option 2-1>

The UE may report the value of the highest quality (the value with the best measurement quality/the best measurement value) as an absolute value for the candidate cells of each TN/NTN. The UE may report difference values with respect to the absolute value for the quality (measurement value) of candidate cells other than those (other candidate cells).

### <Option 2-2>

The UE may report the measurement value as an absolute value for the candidate cell having a value of the highest quality (a value of the best measurement quality/the best measurement value) among the plurality of candidate cells. The UE may report difference values with respect to the absolute value for the quality (measurement value) of candidate cells other than that (other candidate cells).

### <Option 2-3>

The UE may report the measurement value as an absolute value for the candidate cell having a value of the highest quality (a value of the best measurement quality/the best measurement value) among the plurality of candidate cells of the TN. The UE may report difference values with respect to the absolute value for the quality (measurement value) of candidate cells other than that (other candidate cells).

### <Option 2-4>

The UE may report the measurement value as an absolute value for the candidate cell having a value of the highest quality (a value of the best measurement quality/the best measurement value) among the plurality of candidate cells of the NTN. The UE may report difference values with respect to the absolute value for the quality (measurement value) of candidate cells other than those (other candidate cells).

The rule indicated in each of the above-described options may be configured/indicated by higher layer signaling/physical layer signaling, or may be determined based on a rule predefined by a specification/UE capability reporting.

### [Specific Examples]

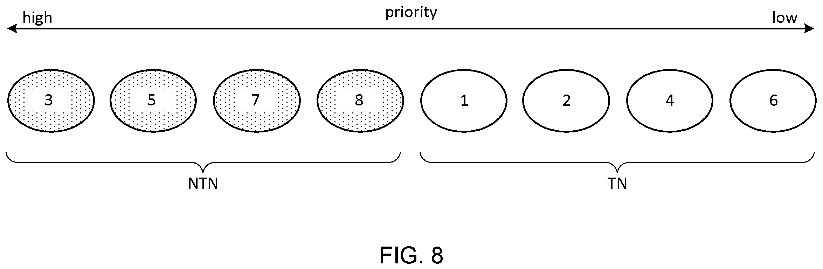

Specific examples of the priority of the TN and the NTN cells will be described with reference to FIGS. 8 to 12. FIGS. 8 to 12 are diagrams to show examples of priority of the TN and NTN cells according to the first embodiment. In FIGS. 8 to 12, the numbers assigned to the cells represent the order of the measurement results from the best (highest). For example, the smallest number 1 indicates the best measurement result, and the largest number 8 indicates the worst measurement result. In FIGS. 8 to 12, it is assumed that ordering (numbering) of cells and measurement results is all common.

In FIG. 8, the horizontal axis represents priority, and the priority decreases (becomes lower) from the left to the right. In other words, the leftmost cell is the cell with the highest priority.

In FIG. 8, four NTN cells are configured and four TN cells are configured. In the example of FIG. 8, first, the priority of the NTN cell is configured to be higher than that of the TN cell regardless of the measurement result. Therefore, the four NTN cells are prioritized over the four TN cells.

Further, among the four NTN cells, priority is configured in descending order of the measurement results (for example, 3, 5, 7, and 8). Further, among the four TN cells, priority is configured in descending order of the measurement results (for example, 1, 2, 4, and 6).

In this case, the measurement results for all of the eight cells may be the reporting targets, or the measurement results for some of the cells may be a target of reporting.

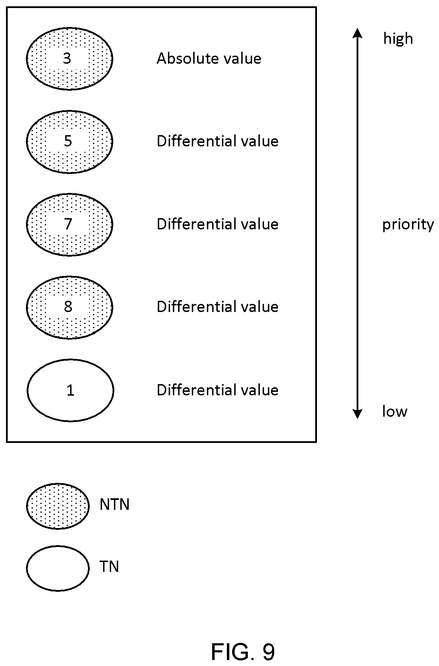

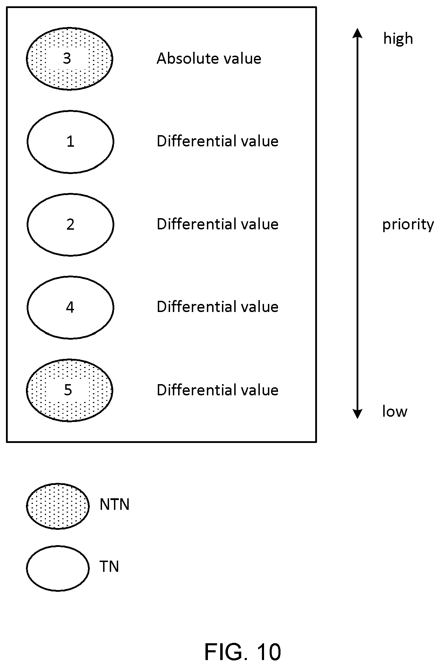

FIG. 9 illustrates an example of priority application to one reporting instance. In FIG. 9, the vertical axis represents priority, and the priority decreases (becomes lower) from the top to the bottom. In other words, the cell located at the top is the cell with the highest priority. The same applies to FIGS. 10 to 12. FIGS. 9 to 11 illustrate examples in which measurement results of five cells are included in one report.

In FIG. 9, the measurement value of the cell having the best measurement result among the NTN cells may be reported as an absolute value. In the other NTN cells, difference values with the absolute value as the reference value (difference value with respect to the absolute value) may be reported in descending order of the measurement result. Furthermore, a value having the best measurement result among the TN cells may be reported using a difference value with the absolute value as a reference value. These multiple measurement results may be reported in one reporting instance.

FIG. 10 illustrates an example of priority application to the absolute value. In FIG. 10, the measurement value of the cell having the best measurement result among the NTN cells may be reported as an absolute value. For other cells, difference values with the absolute value as the reference value (difference values with respect to the absolute value) may be reported in descending order of the measurement result, regardless of the TN/NTN cells. These multiple measurement results may be reported in one reporting instance.

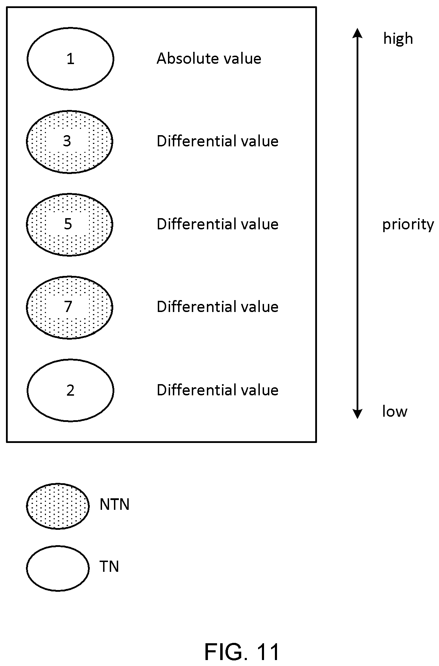

FIG. 11 illustrates an example of priority application to three difference values, for example. In FIG. 11, the measurement value of the cell having the best measurement result among the TN cells may be reported as an absolute value. For other cells, for example for the NTN cells, difference values with the absolute value as the reference value (difference values with respect to the absolute value) may be reported in descending order of the measurement result. Further, a difference value with the absolute value as a reference value may be reported. These multiple measurement results may be reported in one reporting instance.

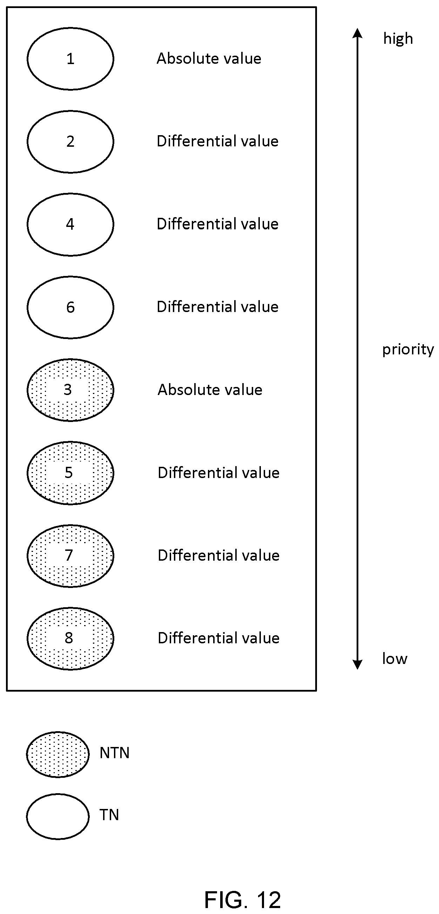

FIG. 12 illustrates an example of reporting of an absolute value to each of the TN/NTN. In FIG. 12, for example, the TN cell is prioritized, and the measurement value of the cell having the best measurement result among the TN cells may be reported as an absolute value. In the other TN cells, difference values with the absolute value as the reference value (difference value with respect to the absolute value) may be reported in descending order of the measurement result.

The measurement value of the cell having the best measurement result among the NTN cells may be reported as an absolute value. In the other NTN cells, difference values with the absolute value as the reference value (difference value with respect to the absolute value) may be reported in descending order of the measurement result.

Note that, although FIG. 12 illustrates an example in which measurement results are reported for all of the four TN cells and all of the four NTN cells, the present disclosure is not limited to this. Only some of the plurality of cells may be selected and reported in descending order of measurement results.

As illustrated in FIG. 12, the cell to report the absolute value is not limited to one cell, and one cell may be selected from each of the TN cells and the NTN cells, or two or more cells, or all the cells may be selected. Note that, reporting one absolute value from each of the TN cells and the NTN cells allows appropriate calculation of the difference value of each TN/NTN cell and thus reduces the number of bits for reporting.

In the above-described examples, the measurement value of the cell having the best measurement result among the TN/NTN cells is reported as an absolute value, but the present disclosure is not limited thereto. The cell to report the absolute value may be, for example, a cell whose measurement result is the X-th best (X may satisfy 1 ≤ X ≤ M) among M TN/NTN cells, or may be any cell. The absolute value may be referred to as a reference value for calculating the difference values.

In the present disclosure, examples in which the measurement results of the TN and NTN cells coexist in one reporting instance are described, but the present disclosure is not limited thereto. The reporting instances may be separated for each of the TN and NTN. For example, in a case of DC, reports are provided by separate reporting instances or by a common (one) reporting instance for the MCG/SCG. Similarly, in a case of CA, reports are provided by separate reporting instances or by a common (one) reporting instance for the PCell/SCell.

According to the first embodiment described above, the UE can report quality of beam to the NW according to the priority.

### <Second Embodiment>

The second embodiment relates to the number of cells being targets of reporting.

### [Signaling of NW]

The number of candidate cells that can be targets of reporting may be configured/indicated by higher layer signaling/physical layer signaling, or may be determined based on a rule predefined by a specification/UE capability reporting.

The number of candidate cells that can be targets of reporting can be exemplified by the following options.

### <Option 1>

The UE may perform reporting for at least one or more candidate cells among configured/indicated candidate cells of the TN.

### <Option 2>

The UE may perform reporting for at least one or more candidate cells among configured/indicated candidate cells of the NTN.

In each of the above-described options, when the number of candidate cells that can be reported in one reporting instance exceeds the configured/indicated number, the UE may determine the remaining candidate cells (candidate cells exceeding the number, i.e., the candidate cells not to be reported).

In each of the above-described options, both the number of candidate cells for TN and NTN may be configured/indicated.

When the number of candidate cells of either the TN or the NTN is configured/indicated, this may be interpreted that priority is configured/indicated for one of the configured/indicated TN and NTN. In this case, this may be interpreted that priority is not configured/indicated for the other. In other words, the priority of cell selection of either the TN or the NTN may be implicitly indicated by configuring/indicating the number of candidate cells of either the TN or the NTN.

### [Signaling Timing]

### <Option 1>

The number of candidate cells of the TN/NTN that can be targets of reporting may be semi-statically configured by higher layer signaling (for example, RRC)/rule predefined by specification/UE capability reporting.

### <Option 2>

The number of candidate cells of the TN/NTN that can be targets of reporting may be dynamically indicated by higher layer signaling (for example, MAC CE)/physical layer signaling (for example, DCI)/rule predefined by specification/UE capability reporting.

### [UE Behavior]

The UE may report quality of a scheduled PUCCH/PUSCH to the NW by using the UCI/MAC CE according to the configured/indicated number of candidate cells. The number of candidate cells being targets of reporting may be determined based on at least one of the following options.

When the number of candidate cells of both the TN and NTN are configured/indicated, the following options 1 to 4 are assumed.

### <Option 1>

The UE may report the value of the highest quality (the value with the best measurement quality/the best measurement value) as an absolute value for the candidate cells of each TN/NTN. The UE may report difference values with respect to the absolute value for the quality (measurement value) of candidate cells other than that (other candidate cells).

### <Option 2>

The UE may report the measurement value as an absolute value for the candidate cell having a value of the highest quality (a value of the best measurement quality/the best measurement value) among the plurality of candidate cells. The UE may report difference values with respect to the absolute value for the quality (measurement value) of candidate cells other than that (other candidate cells).

### <Option 3>

The UE may report the measurement value as an absolute value for the candidate cell having a value of the highest quality (a value of the best measurement quality/the best measurement value) among the plurality of candidate cells of the TN. The UE may report difference values with respect to the absolute value for the quality (measurement value) of candidate cells other than that (other candidate cells).

### <Option 4>

The UE may report the measurement value as an absolute value for the candidate cell having a value of the highest quality (a value of the best measurement quality/the best measurement value) among the plurality of candidate cells of the NTN. The UE may report difference values with respect to the absolute value for the quality (measurement value) of candidate cells other than that (other candidate cells).

When the number of candidate cells of either the TN or NTN are configured/indicated, the following options 5 to 9 are assumed.

### <Option 5>

The UE may report the measurement value as an absolute value for the candidate cell having a value of the highest quality (a value of the best measurement quality/the best measurement value) among the candidate cells (of either the TN or the NTN) for which the number of candidate cells is configured/indicated. The UE may report difference values with respect to the absolute value for the quality (measurement value) of candidate cells other than that (other candidate cells).

### <Option 6>

The UE may report the measurement value as an absolute value for the candidate cell having a value of the highest quality (a value of the best measurement quality/the best measurement value) among the candidate cells (of the other of the TN and the NTN) for which the number of candidate cells is not configured/indicated. The UE may report difference values with respect to the absolute value for the quality (measurement value) of candidate cells other than that (other candidate cells).

### <Option 7>

The UE may report the value of the highest quality (the value with the best measurement quality/the best measurement value) as an absolute value for the candidate cells of each TN/NTN. The UE may report difference values with respect to the absolute value for the quality (measurement value) of candidate cells other than that (other candidate cells).

### <Option 8>

The UE may report the measurement value as an absolute value for the candidate cell having a value of the highest quality (a value of the best measurement quality/the best measurement value) among the plurality of candidate cells of the TN. The UE may report difference values with respect to the absolute value for the quality (measurement value) of candidate cells other than that (other candidate cells).

### <Option 9>

The UE may report the measurement value as an absolute value for the candidate cell having a value of the highest quality (a value of the best measurement quality/the best measurement value) among the plurality of candidate cells of the NTN. The UE may report difference values with respect to the absolute value for the quality (measurement value) of candidate cells other than that (other candidate cells).

The rule indicated in each of the above-described options may be configured/indicated by higher layer signaling/physical layer signaling, or may be determined based on a rule predefined by a specification/UE capability reporting.

### [Specific Examples]

In the second embodiment, as in the first embodiment described above, the UE may determine/judge the number of cells being a target of reporting according to a specific rule, for example, as shown in FIGS. 8 to 12.

The UE may determine, as the cells being a target of reporting, the cells having measurement quality from the best to the X-th highest measurement quality among the plurality of candidate cells of the TN/NTN. In other words, the UE may determine the number of cells being a target of reporting, based on the measurement quality.

According to the second embodiment described above, the UE can report the quality of the beam to the NW according to the number of cells being a target of reporting.

### <Third Embodiment>

The third embodiment relates to events/thresholds that are independent for each cell.

### [Signaling of NW]

The events/thresholds for triggering the L1 measurement report according to (depending on) the candidate cells of the TN/NTN may be configured/indicated by higher layer signaling/physical layer signaling, or may be determined based on a rule predefined by a specification/UE capability reporting.

Here, different events may be configured/indicated between the TN and the NTN or for each candidate cell.

For an event requiring thresholds (for example, A1/A2/A4/A5), different thresholds may be configured/indicated between the TN and the NTN or for each candidate cell.

### [Signaling Timing]

### <Option 1>

The event/threshold may be semi-statically configured by higher layer signaling (for example, RRC)/rule predefined by specification/UE capability reporting.

### <Option 2>

The event/threshold may be dynamically indicated by higher layer signaling (for example, MAC CE)/physical layer signaling (for example, DCI)/rule predefined by specification/UE capability reporting.

### [UE Behavior]

The UE may report quality of a scheduled PUCCH/PUSCH to the NW by using the UCI/MAC CE according to the configured/indicated event/threshold.

According to the third embodiment described above, the UE can report the quality of the beam to the NW according to the event/threshold independent for each cell.

### <Fourth Embodiment>

The fourth embodiment relates to a quality offset between the TN and the NTN.

As described above, measurement quality may differ between the TN and the NTN due to a difference in distance from the UE. Thus, the inventors of the present invention came up with the idea of a method of compensating for a difference in measurement quality between a TN and an NTN in advance.

Specifically, a quality offset between the candidate cells of the TN and the NTN is defined. The quality offset may mean a difference in measurement quality (measurement results) between the TN and the NTN. More specifically, the quality offset may mean a difference of the NTN with respect to the TN.

### [Signaling of NW]

The quality offset (RSRP/SINR/RSRQ, or the like) between the candidate cells of the TN and the NTN may be configured/indicated by higher layer signaling/physical layer signaling, or may be determined based on a rule predefined by a specification/UE capability reporting.

The quality offset may be configured/indicated for each type of quality.

The quality offset may be applied to the TN/NTN candidate cells.

### [Signaling Timing]

### <Option 1>

The quality offset may be semi-statically configured by higher layer signaling (for example, RRC)/rule predefined by specification/UE capability reporting.

### <Option 2>

The quality offset may be dynamically indicated by higher layer signaling (for example, MAC CE)/physical layer signaling (for example, DCI)/rule predefined by specification/UE capability reporting.

### [UE Behavior]

The UE may select a cell and a beam according to the configured/indicated quality offset. The UE may report quality of a scheduled PUCCH/PUSCH to the NW by using the UCI/MAC CE.

### [Specific Examples]

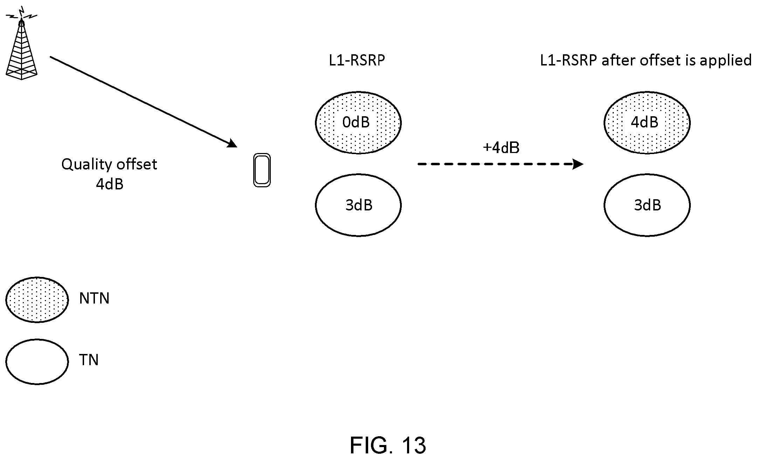

FIG. 13 is a diagram to show an example of the quality offset according to the fourth embodiment. For example, the base station may configure/indicate the quality offset (for example, 4 dB) for the UE. The UE may correct (compensate) the measured result (for example, L1-RSRP) according to (by applying) the configured/indicated quality-offset. To be more specific, as shown in FIG. 13, assume that an actual measurement value (measured value) of a cell in the NTN is 0 dB and an actual measurement value (measured value) of a cell in the TN is 3 dB. In this case, the UE may correct the measurement value of the cell in the NTN to 0 + 4 = 4 dB by applying the quality offset.

As described above, by introducing the quality offset, for example, even when the difference value for the cells of the TN/NTN is calculated from the absolute value of the cell of the NTN/TN in the first embodiment, it is possible to calculate an appropriate difference value in consideration of the error between the TN and the NTN.

According to the fourth embodiment described above, the UE can select an appropriate cell/beam according to the quality offset and can report the quality of the beam to the NW.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:
- supporting of specific processing/operation/control/information for at least one of the above-described embodiments
- supporting of cell switch/measurement report by L1/L2
- supporting of cell switch/measurement report in the TN/NTN
- supporting of a parameter related to priority of cell selection
- supporting of a parameter related to the number of cells being a target of reporting
- supporting of a parameter related to events/thresholds that are independent for each cell
- supporting of a parameter related to a quality offset between the TN and the NTN.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of cell switch by the potential cell switch command, any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Note)

Regarding one embodiment (first embodiment) of the present disclosure, the following supplementary notes of the invention will be given.

### {Supplementary Note 1}

A terminal including:
a receiving section that receives information related to a priority of cell selection for a non-terrestrial network (NTN) or a terrestrial network (TN); and
a control section that determines a cell being a target of reporting a measurement result of received power, based on the priority.

### {Supplementary Note 2}

The terminal according to supplementary note 1, wherein the control section determines the cell being a target of reporting by prioritizing a cell in either the NTN or the TN.

### {Supplementary Note 3}

The terminal according to supplementary note 1 or 2, wherein the control section determines the cell being a target of reporting according to a priority indicated by quality of a measurement result.

### {Supplementary Note 4}

The terminal according to any one of supplementary notes 1 to 3, wherein the control section performs control to report, as an absolute value, a measurement result of a cell having a certain specific quality among measurement results of a plurality of cells, and to report measurement results of one or more other cells among the plurality of cells as difference value with respect to the absolute value.

### (Supplementary Note)

Regarding one embodiment (second embodiment) of the present disclosure, the following supplementary notes of the invention will be given.

### {Supplementary Note 1}

A terminal including:
a receiving section that receives information related to a number of cells of a non-terrestrial network (NTN) or a terrestrial network (TN); and
a control section that determines the number of cells each being a target of reporting a measurement result of received power, based on the information.

### {Supplementary Note 2}

The terminal according to supplementary note 1, wherein the control section determines reporting target cells the number of which exceeds the number of cells.

### {Supplementary Note 3}

The terminal according to supplementary note 1 or 2, wherein when the information includes only one of the number of cells of the NTN and the number of cells of the TN, the control section determines cells being target of reporting by prioritizing a cell of the one of the networks.

### {Supplementary Note 4}

The terminal according to any one of supplementary notes 1 to 3, wherein the control section determines the number of cells being targets of reporting, based on quality of measurement results of a plurality of cells.

### (Supplementary Note)

Regarding one embodiment (fourth/first/third embodiments) of the present disclosure, the following supplementary notes of the invention will be given.

### {Supplementary Note 1}

A terminal including:
a receiving section that receives a quality offset related to received power of a non-terrestrial network (NTN) and a terrestrial network (TN); and
a control section that corrects received power, based on the quality offset.

### {Supplementary Note 2}

The terminal according to supplementary note 1, wherein the control section determines the cell being a target of reporting according to a priority indicated by quality of a measurement result.

### {Supplementary Note 3}

The terminal according to supplementary note 1 or 2, wherein the control section performs control to report, as an absolute value in consideration of the quality offset, a measurement result of a cell having a certain specific quality among measurement results of a plurality of cells, and to report measurement results of one or more other cells among the plurality of cells as difference value with respect to the absolute value.

### {Supplementary Note 4}

The terminal according to any one of supplementary notes 1 to 3, wherein
the receiving section receives information related to an event or a threshold that triggers reporting of a measurement result of the received power for each cell, and
the control section controls the trigger of the report for each cell, based on the information.

### (Radio Communication System)

Hereinafter, a structure of a radio communication system according to one embodiment of the present disclosure will be described. In this radio communication system, any of the radio communication methods according to each embodiment of the present disclosure described above may be used alone or may be used in combination for communication.

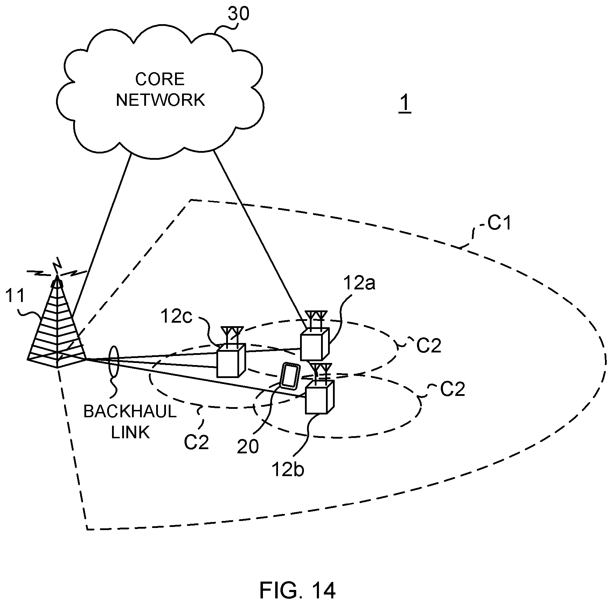

FIG. 14 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are each narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

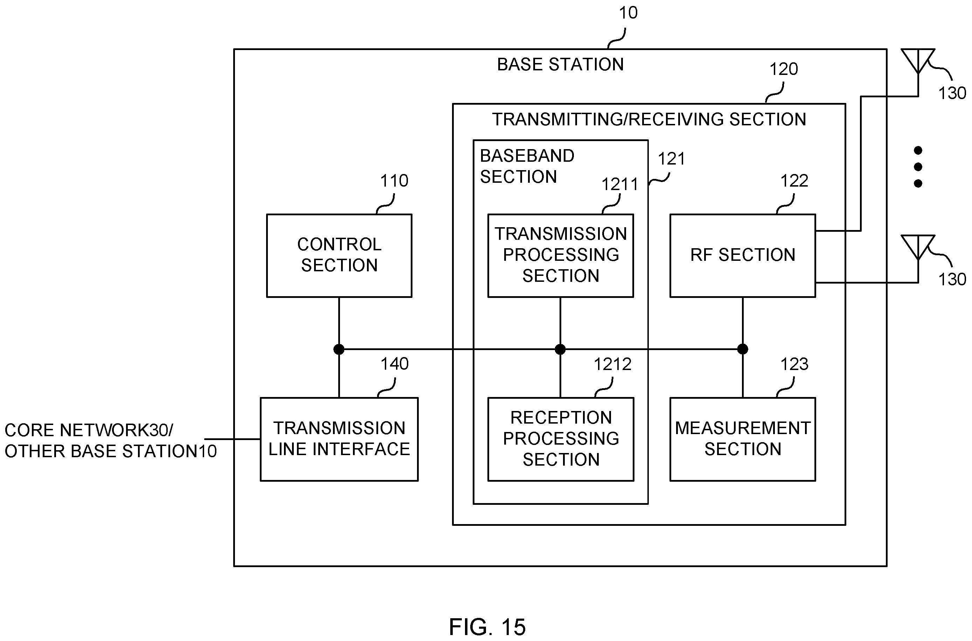

FIG. 15 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information related to a priority of cell selection of the non-terrestrial network (NTN) or the terrestrial network (TN). The transmitting/receiving section 120 may receive a report of a measurement result of received power for a cell determined based on the priority.

The transmitting/receiving section 120 may transmit information related to the number of cells of the non-terrestrial network (NTN) or the terrestrial network (TN). The transmitting/receiving section 120 may receive a report of a measurement result of received power for a cell determined based on the number of cells.

The transmitting/receiving section 120 may transmit a quality offset related to received power of the non-terrestrial network (NTN) and the terrestrial network (TN). The transmitting/receiving section 120 may receive a measurement result of received power corrected based on the quality offset.

### (User Terminal)

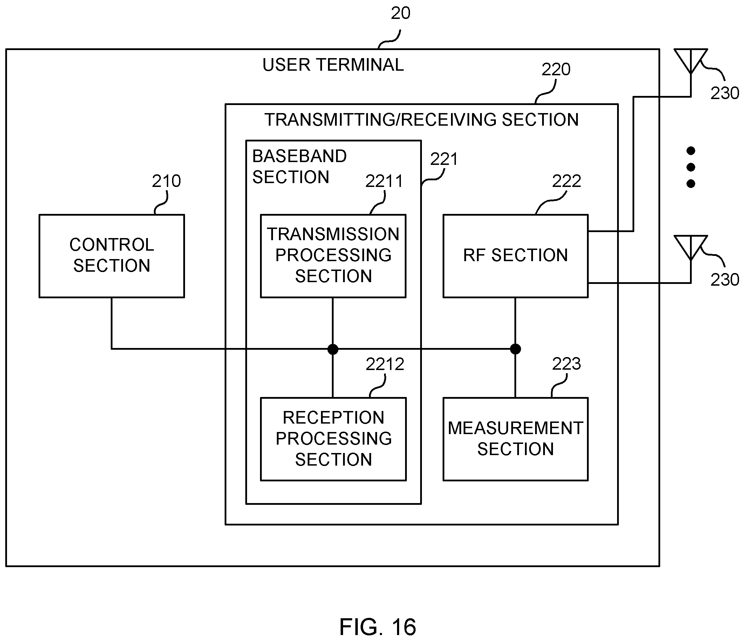

FIG. 16 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to a priority of cell selection of the non-terrestrial network (NTN) or the terrestrial network (TN). The control section 210 may determine a cell being a target of reporting a measurement result of received power, based on the priority. The control section 210 may determine the cell being a target of reporting by prioritizing a cell in either the NTN or the TN. The control section 210 may determine the cell being a target of reporting according to a priority indicated by quality of a measurement result. The control section 210 may perform control to report, as an absolute value, a measurement result of a cell having a certain specific quality among measurement results of a plurality of cells, and to report measurement results of one or more other cells among the plurality of cells as difference value with respect to the absolute value.

The transmitting/receiving section 220 may receive information related to the number of cells of the non-terrestrial network (NTN) or the terrestrial network (TN). The control section 210 may determine the number of cells each being a target of reporting a measurement result of received power, based on the information. The control section 210 may determine reporting target cells the number of which exceeds the number of cells. The control section 210 may determine, when the information includes only one of the number of cells of the NTN and the number of cells of the TN, cells being target of reporting by prioritizing a cell of the one of the networks. The control section 210 may determine the number of cells being targets of reporting, based on quality of measurement results of a plurality of cells.

The transmitting/receiving section 220 may receive a quality offset related to received power of the non-terrestrial network (NTN) and the terrestrial network (TN). The control section 210 may correct received power, based on the quality offset. The control section 210 may determine the cell being a target of reporting according to a priority indicated by quality of a measurement result. The control section 210 may perform control to report, as an absolute value in consideration of the quality offset, a measurement result of a cell having a certain specific quality among measurement results of a plurality of cells, and to report measurement results of one or more other cells among the plurality of cells as difference value with respect to the absolute value. The transmitting/receiving section 220 may receive information related to an event or a threshold that triggers reporting of a measurement result of the received power for each cell. The control section 210 may control the trigger of the report for each cell, based on the information.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

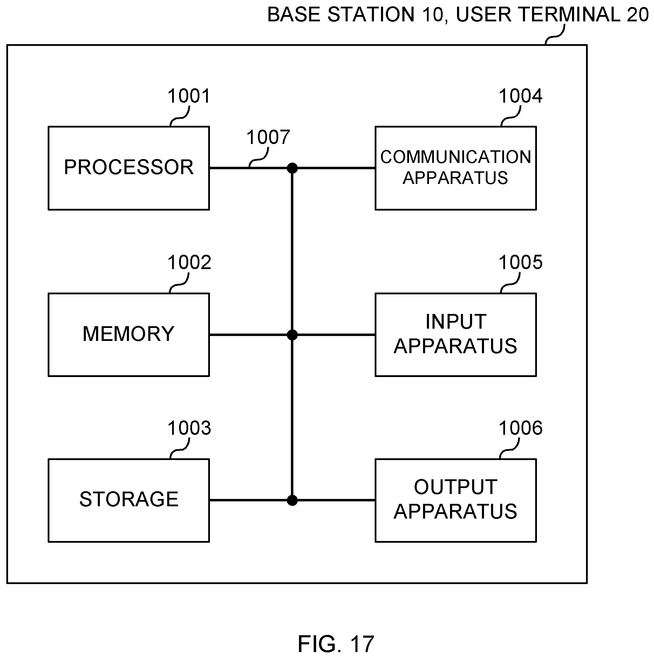

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

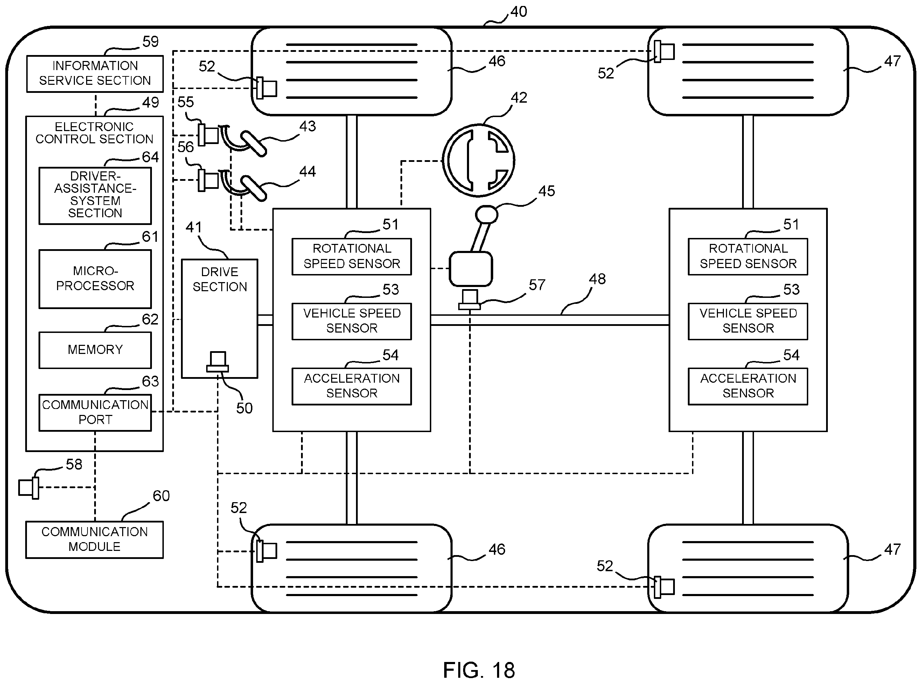

FIG. 18 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives information related to a priority of cell selection for a non-terrestrial network (NTN) or a terrestrial network (TN); and
a control section that determines a cell being a target of reporting a measurement result of received power, based on the priority.

2. The terminal according to claim 1, wherein
the control section determines the cell being a target of reporting by prioritizing a cell in either the NTN or the TN.

3. The terminal according to claim 1, wherein
the control section determines the cell being a target of reporting according to a priority indicated by quality of a measurement result.

4. The terminal according to claim 1, wherein
the control section performs control to report, as an absolute value, a measurement result of a cell having a certain specific quality among measurement results of a plurality of cells, and to report measurement results of one or more other cells among the plurality of cells as difference value with respect to the absolute value.

5. A radio communication method for a terminal, the radio communication method comprising:
receiving information related to a priority of cell selection for a non-terrestrial network (NTN) or a terrestrial network (TN); and
determining a cell being a target of reporting a measurement result of received power, based on the priority.

6. A base station comprising:
a transmitting section that transmits information related to a priority of cell selection of a non-terrestrial network (NTN) or a terrestrial network (TN); and
a receiving section that receives a report of a measurement result of received power for a cell determined based on the priority.
